# EUROPEAN PATENT APPLICATION

(11) **EP 3 945 359 A2**
(43) Date of publication of application: **02.02.2022**
(21) Application number: 21188979.5
(22) Date of filing: 31.07.2021
(51) Int. Cl.: G02B 27/48

(54) **OPTICAL DEVICE, METHOD FOR MANUFACTURING AN OPTICAL DEVICE AND METHOD FOR OPERATING AN OPTICAL DEVICE**

(30) Priority: 31.07.2020 DE 102020120337
(71) Applicant: Optotune AG, 8953 Dietikon (CH)
(72) Inventor: ZESCH, Wolfgang, 8953 Dietikon (CH); HEIDLER, Jonas, 8953 Dietikon (CH); PALOU GARCIA, Xavier, 8953 Dietikon (CH)
(74) Representative: Schulz Junghans Patentanwälte PartGmbB

(57) **Abstract**

Optical device (1) comprising an optical element (10), which is mounted on a carrier (20) by means of a platform (30),
- the platform (30) comprises a base (32) and an elastic structure (31), wherein
- the base (32) is connected to the optical element (10),
- the elastic structure (31) connects the base (32) and the carrier (20),
- the platform (30) extends along an x-y plane defined by an x-direction (101) and a y-direction (102),
- an actuator (40) is arranged to apply a force to the base (32) in a direction along the x-y-plane,
- the elastic structure (32) is elastic in the x-direction (101) and in the y-direction (102), and
- the base (32) and the elastic structure (31) are fabricated in a one-piece manner.

## Description

The optical device described herein is arranged for actively controlling a property of electromagnetic radiation impinging on the optical device. In particular the electromagnetic radiation is in the wavelength range of visible light. The property may be direction, mutual interference, spectrum and/or focus of a light beam. In particular, the optical device is a speckle reducer, which is arranged to reduce a speckle pattern produced by the mutual interference of a set of coherent wavefronts.
The method for manufacturing an optical device is particularly suited for manufacturing the said optical device. The method for operating an optical device is particularly suited for operating the said optical device.

The optical device comprises an optical element, which is mounted on a carrier by means of a platform. The optical element may be a transparent or a reflective optical element, which is arranged to interact with the electromagnetic radiation. In particular, the optical element is arranged to diffusely reflect or transmit electromagnetic radiation. For example, the optical element is a diffusor. The optical element may essentially have a square shape having an edge length of 33 mm times 31 mm and an essentially quadratic optically usable area of 900 mm². The optical element may be a diffusor having a single diffusor surface. In particular, said diffusor surface may be arranged in an image plane of an optical system having additional optical elements.

The optical element is attached to the platform. The platform is attached to the carrier. In particular, the platform and/or the carrier are arranged to move the optical element in a definable manner. The platform and/or the carrier may have an opening through which electromagnetic radiation is transmittable. The platform and/or the carrier may be arranged such that in intended operation the electromagnetic radiation interacts with the optical element without interacting with the platform and/or the carrier.

The platform comprises a base and an elastic structure. The optical element is attached to the base. The elastic structure links the base and the carrier. The base and the elastic structure are fabricated in a one-piece manner. Hence, the elastic structure comprises the same material as the base. For example, the base and the elastic structure are fabricated from a sheet material, in particular apolymer sheet material or a metal sheet material. The transition between the elastic structure and the baser is free of fasteners, adhesives and fastening areas.

The elastic structure and the carrier may be connected by an interlocking and formfitting connection. The platform, in particular the base, essentially extends along an xy-plane, which is defined by an x-direction and a y-direction, both directions extending along the xy-plane. In particular, the x-direction and the y-direction extend perpendicularly with respect to each other. The elastic structure is elastic in the x-direction and in the y-direction. Here and in the following, elastic in a certain direction means, that an object has a particularly low elastic modulus in said direction. For example, the elastic module in a direction to which elastic properties are assigned is at least 5 times, preferably at least 10 times, smaller than in a direction that is not explicitly assigned an elastic property.

The optical device comprises an actuator, which is arranged to apply a force. The force works between the base and the carrier against an elastic force of the elastic structure. For example, the actuator applies the force directly to the platform and the carrier. The force applied by the actuator may be a magnetic force and/or an electromagnetic force. In particular, an essential portion of the force applied by the actuator works along the xy-plane. For example, the actuator is arranged to apply a force in a single direction, wherein said single direction runs along the xy-plane.

The actuator enables a controlled movement of the base with respect to the carrier. In particular, the optical device is arranged such that the optical element is moved with respect to the carrier along a path which extends essentially along the xy-plane. In particular, the path has a shape which is elliptic or circular, the path may have an amplitude between 0.5 and 3 mm at a frequency between 30 Hz and 200 Hz, preferably 50 Hz and 80 Hz. In particular, the path extends in a direction perpendicularly to the xy-plane less than 0.1 mm, preferably less than 0.05 mm.

According to one embodiment of the optical device, the optical device comprises an optical element, which is mounted on a carrier by means of a platform. The platform comprises a base and an elastic structure, wherein the base is connected to the optical element and the elastic structure connects the base and the carrier. The base and the elastic structure may be fabricated in a one-piece manner.

The platform extends along an xy-plane defined by an x-direction and a y-direction. An actuator is arranged to apply a force to the base in a direction along the xy-plane and the elastic structure is elastic in the x-direction and in the y-direction.

The optical element is a transmissive optical element. In particular the optical element may be diffusely transparent. The optical is arranged to interact with electromagnetic radiation, in particular light, by means of transmission.

The optical device described herein is based on the following considerations. Optical elements which are moveably mounted on a platform require precise mounting, wherein the mounting requires well defined mechanical properties. Furthermore, many applications require a particularly cost efficient fabrication.

The optical device described herein makes use of the platform comprising the base and the elastic structure, wherein the base and the elastic structure are fabricated in a one-piece manner. Advantageously, the one-piece manner produced platform provides a particularly precise mounting with accurately definable mechanical properties, wherein the platform is simple and cost efficient in its fabrication.

According to one embodiment, the platform has a first resonance frequency along the x-direction and a second resonance frequency along the y-direction. The first resonance frequency is essentially defined by the mass of the base and the optical element and the elastic modulus of the elastic structure along the x-direction. The second resonance frequency is essentially defined by the mass of the base and the optical element and the elastic modulus of the elastic structure along the y-direction. According to a first alternative, the first and the second resonance frequencies are essentially identical. In particular, the deviation between the first and the second resonance frequency is less than
1%, in particular less than 0.1% from an average frequency of the first and the second resonance frequency. Advantageously, essentially identical resonance frequencies enable simplified control of the motion path of the optical element with relatively low power consumption of the actuator, when driven close to the first and second resonance frequencies.

According to a second alternative, the first and the second resonance frequency differ from each other by between 0.1% and 10%, in particular between 1% and 5%, from an average frequency of the first and the second resonance frequency. Advantageously, the second alternative allows to control the motion path of the optical element with the actuator exerting a force in a single direction, when the actuator drives the motion with a frequency inbetween the first and the second resonance frequency. This allows a particularly simplified control of the optical device.

According to an embodiment, the elastic structure comprises an x-spring and a y-spring, wherein the x spring comprises at least one bending beam of a first kind and the y-spring comprises at least one bending beam of a second kind. In an undeflected state the bending beam of the first kind extends perpendicularly to the x-direction and the bending beam of the second kind extends perpendicularly to the y-direction. The x-spring may comprise multiple structures, in particular multiple bending beams of the first kind, which have a well-defined elastic modulus. The y-spring may comprise multiple structures, in particular multiple bending beams of the second kind, which have a well-defined elastic modulus. The elastic modulus of the beam of the first kind is defined by its length in a direction perpendicular to the x-direction. The elastic modulus of the beam of the second kind is defined by its length in a direction perpendicular to the y-direction. Advantageously, a spring structure comprising a beam essentially defining the elastic modulus, is particularly simple manufacturable.

According to one embodiment the base has an outer contour. The outer contour forms the circumferential contour of the base. The outer contour may form a polygonal, preferably a rectangular, shape as seen in top view of the base. The top view is in a direction along the optical axis of the optical device.

The bending beam of the first kind may extend along a first region of the outer contour and the bending beam of the second kind may extend along a second region of the outer contour. In particular, in a non-deflected state the bending beam of the first kind extends parallel along the first region of the outer contour and the bending beam of the second kind extends parallel along the second region of the outer contour. For example, the bending beam of the first kind and the bending beam of the second kind partially frame the base. Advantageously, this arrangement of the bending beams results in a particularly small footprint of the optical device.

According to one embodiment, the stiffness of the elastic structure for movements in a direction obliquely, in particular perpendicularly, with respect to the x-y-plane is at least 10 time higher than the stiffness of the elastic structure for movements in a direction along the x-y-plane. The path along which the optical element is moved extends essentially along the xy-plane. In particular, the amplitude of the movement of the optical element is at least ten times larger, preferably at least 100 times larger, than the amplitude of the optical element in a direction perpendicularly to the xy-plane. Advantageously, a small amplitude in a direction perpendicular to the xy-plane enables a particularly precise positioning of the optical element in an optical path of an optical system.

According to one embodiment, the optical device comprises a sensor which is arranged to detect a position of the base with respect to the carrier, and the optical device comprises a controller which is arranged to control a frequency and/or amplitude of the relative motion of the platform with respect to the base. In particular, the sensor and the controller enable a closed loop control of the motion path of the optical element. Advantageously, the sensor and the controller enable a precise monitoring and controlling of the motion of the optical element.

According to an embodiment, the actuator is a voice coil actuator, wherein the voice coil actuator is the sensor. For example, the base comprises a magnet and the carrier comprises a coil or vice versa. The actuator may be arranged to exert a force between the carrier and the platform and to measure the relative position of the carrier and the platform alternatingly. Advantageously, the integration of the sensor in the actuator enables a particularly compact design of the optical device.
According to an embodiment, the optical device comprises a transmission element, wherein the transmission element is arranged to limit the maximum deflection of the platform with respect to the carrier in all directions along the xy-plane, wherein the maximum deflection in all directions along the xy-plane is essentially the same. In particular, the transmission element may comprise a mechanical stop, which limits the motion of the platform with respect to the carrier along the xy-plane. For example, the transmission element comprises a pin, which is fixedly connected to the carrier, and an opening in the platform, wherein the diameter of the pin is smaller than the diameter of the opening. Alternatively, the pin is fixedly attached to the platform and the carrier comprises said opening.
For example, the actuator moves the platform with respect to the carrier such, that the pin lies against an inner edge defining a contour of the opening. Thus, the platform moves along a path defined by the said contour. In particular the contour has a circular contour. The ratio of the diameter of the pin to the diameter of the opening defines the amplitude of the deflection of the platform. In particular, the transmission element comprises multiple openings and multiple pins, wherein each pin is assigned to one of the multiple openings.

The transmission element may be arranged to guide the motion of the platform with respect to the carrier. In particular, the transmission element comprises a cam which defines the motion path of the platform along the xy-plane.

For example, the elastic structure has a particularly high elastic modulus, when the optical device comprises the transmission element. For example, the first resonance frequency and the second resonance frequency are both bellow 10Hz, in particular bellow 5 Hz.

According to one embodiment, the base and the elastic structure are fabricated in a one-piece manner.

According to one embodiment, the optical device comprises an optical axis extending through the optical element. The optical axis represents the desired path of light passing through the optical device. In particular, the optical element is the only part of the optical device, which is arranged on the optical axis. For example, the optical axis does not intersect with the carrier, the base or the elastic structure. The optical axis extends through the optical device. In other words, the optical axis extends from a first side of the optical device to a second side of the optical device, wherein the first side is opposed to the second side. In particular, the optical device comprises a clear aperture, wherein the optical axis extends through said clear aperture. Solely the optical element is arranged in the clear aperture. The clear aperture is surrounded by the platform and/or the carrier at least partially. In particular, the carrier and/or the platform are adjacent on at least three sides in lateral directions, wherein lateral directions extend perpendicular with respect to the optical axis. Preferably the clear aperture is completely surrounded by the carrier and/or the platform in lateral directions.

A method for producing an optical device is also specified. In particular, an optical device described here can be produced with said method. This means that all of the features disclosed for the optical device are also disclosed for the method and vice versa.

The method is for manufacturing an optical device comprising a platform. The platform has a base and an elastic structure, wherein the base and the elastic structure are fabricated from a common metal sheet. In a method step, a contour of the metal sheet is defined, for example by means of punching or etching. In particular, in said method step the contour of the base and the contour of the elastic structure is defined.

The base comprises a first portion of the metal sheet and the elastic structure comprises a second portion of the metal sheet. In a method step the first and the second portion are bent, such that the first portion extends essentially obliquely with respect to the second portion. In particular, the metal sheet is bent such that the first portion extends perpendicularly with respect to the second portion. The elastic structure is manufactured by bending the first portion by 90° with respect to the second portion. According to one embodiment, the elastic structure comprises the x-spring with the bending beam of the first kind and the y-spring with the bending beam of the second kind. The bending beam of the first kind and the bending beam of the second kind are fabricated in a one-piece manner. In particular, the bending beam of the first kind and the bending beam of the second kind are fabricated by bending the second portion of the metal sheet. In particular, the second portion comprises a first subportion and a second subportion, wherein the first subportion comprises the bending beam of the first kind and the second sub portion comprises the bending beam of the second kind. For example, the first subportion extends perpendicularly to the x-direction and the second subportion extends perpendicularly to the y-direction. The first resonance frequency depends on the length of the first subportion along a direction perpendicularly to the x-direction. The second resonance frequency depends on the length of the second subportion perpendicularly to the y-direction.

A method for driving an optical device is also specified. In particular, an optical device described here can be driven with said method. This means that all of the features disclosed for the optical device and for the method for manufacturing an optical device are also disclosed for the method and vice versa. The method for driving an optical device comprises an optical element which is mounted on a carrier by means of a platform. The actuator is driven with a periodic excitation signal having an excitation frequency. The platform has a base which has a first resonance frequency in an x-direction and a second resonance frequency in a y-direction. The first resonance frequency essentially depends on the mass of the base and the optical element and the elastic modulus of an elastic structure along the x-direction. The second resonance frequency depends of the mass of the base and the optical element and the elastic modulus of the elastic structure along the y-direction.

According to a first alternative the excitation frequency is larger or smaller than both the first and the second resonance frequency. For example, the first resonance frequency and the second resonance frequency differ by less than 5%, preferably by less than 3%, from an average frequency of the first and the second resonance frequency. In particular, the actuator is arranged to exert two forces along the xy-plane, wherein the two forces are directed in different directions along the xy-plane and the two forces may differ in their phase with respect to each other. Advantageously, the excitation frequency particularly close to the first and second resonance frequency enables an energy efficient operation, because small forces result in large amplitudes of the optical element's motion.

According to a second alternative, the excitation frequency is in between the first and the second resonance frequency and the absolute value of the difference between excitation frequency and the first resonance frequency and the difference of the excitation frequency and the second frequency is essentially identical. For example, the first and the second resonance frequency differ by more than 5%, in particular by more than 3%, from an average frequency of the first and the second resonance frequency. Furthermore, the force of the actuator acts obliquely with respect to the x-direction and the y-direction along the xy-plane. Advantageously, the driving frequency in between the first and the second resonance frequency enables driving the optical device with an actuator excreting the force in a single direction along the xy-plane. In particular, the actuator is driven with a single channeled signal. Thereby, the complexity of the circuit, which is required to operate the device, is kept particularly low.

According to one embodiment the optical device comprises a sensor which is arranged to detect a position of the base with respect to the carrier, and a controller which is arranged to control a frequency and /or amplitude of the relative motion of the base with respect to the carrier, wherein the movement path of the base in relation to the carrier is controlled with a position based closed-loop control circuit comprising the sensor and the controller. In particular, the base moves along a movement path with respect to the platform. The movement path may have an elliptical shape, in particular a circular shape. In particular, the motion path may have the shape of a Lissajous orbit. Preferably the movement path is determined by means of the sensor, wherein the sensor has a detection frequency which is at least ten times higher than the frequency of the circular motion of the base.

Further advantages and advantageous refinements and developments of the optical device, the method for manufacturing an optical device and the method for operating the optical device result from the following exemplary embodiments illustrated in connection with the figures.
- Fig. 1: shows an exemplary embodiment of an optical device in a schematic perspective view;
- Fig. 2: shows an exemplary embodiment of an optical device in a schematic perspective view;
- Fig. 3: shows an exemplary embodiment of an optical device in a schematic perspective view;
- Fig. 4: shows in an exemplary embodiment a platform of an optical device in a schematic perspective view;
- Fig. 5: shows an exemplary embodiment of an optical device with a transmission structure in a schematic perspective view;
- Fig. 6: shows an exemplary embodiment of an optical device with a transmission structure in a schematic top view; and
- Fig. 7: shows an exemplary embodiment of an optical device with a transmission structure in a schematic top view.

Identical, identical or identically acting elements are provided with the same reference symbols in the figures. The figures and the proportions of the elements shown in the figures among one another are not to be regarded as to scale. Rather, individual elements can be exaggerated in size for better displayability and/or for better comprehensibility.

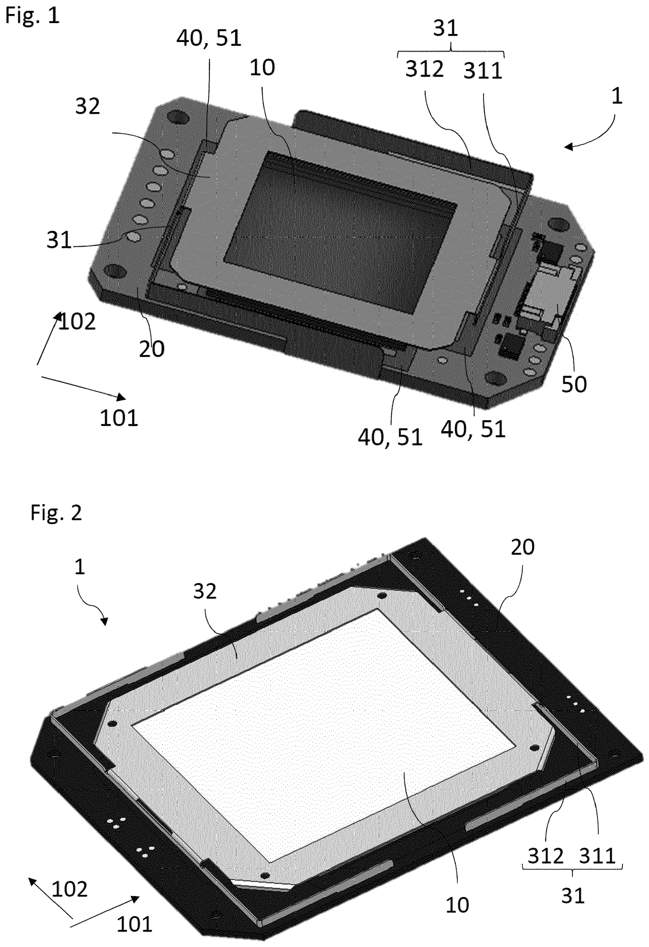

Fig. 1 shows an exemplary embodiment of an optical device 1 in a schematic perspective view. The optical device 1 comprises an optical element 10, which is mounted on a carrier 20 by means of a platform 30. The optical element 10 is a diffusor. The platform 30 comprises a base 32 and an elastic structure 31. The base 32 is connected to the optical element 10 and the elastic structure 31 connects the base 32 and the carrier 20.

The elastic structure 31 comprises an x-spring and a y-spring. The x spring comprises at least one bending beam of a first kind 311 and the y-spring comprises at least one bending beam of a second kind 312. In an undeflected state the bending beam of the first kind 311 extends perpendicularly to the x-direction 101, and in an undeflected state the bending beam of the second kind 312 extends perpendicularly to the y-direction 102. The platform 30 has a first resonance frequency along the x-direction 101 and a second resonance frequency along the y-direction 102 and the first and the second resonance frequencies are essentially identical, or the first and the second resonance frequency differ from each other between 1% and 5%. The first resonance frequency essentially depends on the elasticity of the x-spring and the mass of the base 32 and the optical element 10. The second resonance frequency essentially depends on the elasticity of the y-spring and the mass of the base 32 and the optical element 10.

The platform 30 extends along an x-y plane defined by an x-direction 101 and a y-direction 102. The elastic structure 31 is elastic in the x-direction 101 and in the y-direction 102.
The stiffness of the elastic structure 32 for movements in a direction obliquely, in particular perpendicularly, with respect to the x-y-plane is at least 10 time higher than the stiffness of the elastic structure 32 for movements in a direction along the x-y-plane.

An actuator 40 is arranged to apply a force to the base 32 in a direction along the x-y-plane. The actuator 40 comprises multiple voice coil actuators, wherein the coils are integrated in the carrier 20. In particular, the carrier 20 is a PCB and the conductive tracks of the PCB form a coil which is integrated in the PCB. Furthermore, the actuator 40 comprises multiple magnets (not shown in the figure) which are attached to the base 32. The voice coil actuators are used as a sensor 51 to detect a position of the base 32 with respect to the carrier 20. A controller 50 is arranged to control a frequency and/or amplitude of the relative motion of the base 32 with respect to the carrier 20.

The base 32 and the elastic structure 31 are fabricated in a one-piece manner from a common metal sheet. The base 32 comprises a first portion of the metal sheet and the elastic structure 31 comprises a second portion of the metal sheet. The elastic structure 31 is manufactured by bending the first portion by 90° with respect to the second portion. Thus, the elastic structure 31 extends perpendicularly with respect to the xy-plane.

The elastic structure comprises the x-spring with two bending beams of the first kind 311 and the y-spring with two bending beams of the second kind 312. Each bending beam of the first kind 311 is mechanically connected to one of the bending beams of the second kind 312. Each bending beam of a first kind 311 is fabricated in a one-piece manner with a bending beam of a second kind 312.
In operation the actuator 40 is driven with a periodic excitation signal having an excitation frequency. Either the excitation frequency is larger or smaller than both the first and the second resonance frequency, or the excitation frequency is in between the first and the second resonance frequency and the absolute value of the difference between excitation frequency and the first resonance frequency and the difference of the excitation frequency and the second frequency is essentially identical. In operation, the actuator 40 is driven, such that the base 32 performs an elliptic, preferably circular, motion along the xy-plane with respect to the carrier 20. In particular, the controller 50 enables a closed loop control. In particular, the controller has two channels, wherein a first channel is arranged to control a force of the actuator 40 along the x-direction 101 and a second channel is arranged to control a force of the actuator 40 along the y-direction 102. The frequency of said motion is preferably between 30 Hz and 200 Hz, highly preferred between 50 Hz and 80 Hz. The peak to peak amplitude of said motion is in a range of 0.5 mm to 5 mm, while the amplitude of the motion in a direction perpendicular to the xy-plane is below 0.1 mm.

Fig. 2 shows an exemplary embodiment of an optical device 1 in a schematic perspective view. The optical device 1 shown in figure 2 differs from the embodiment shown in figure 1 in the design of the elastic structure. The embodiment in figure 2 comprises an x-spring having four bending beams of the first kind 311 and a y-spring with four bending beams of the second kind 312.

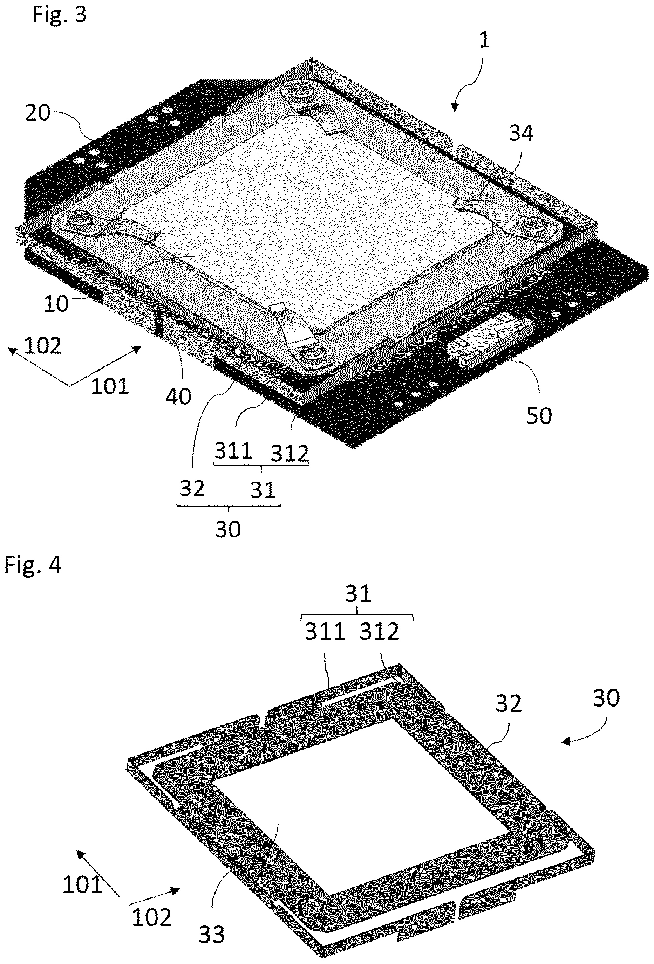

Fig. 3 shows an exemplary embodiment of an optical device 1 in a schematic perspective view. The embodiment shown in figure 3 differs from the embodiment shown in figure 2 in the attachment of the optical element 10 to the base 32. The optical element 10 is attached to the base 32 by means of a fixing element 34. The fixing element 34 is a clamp, which attaches the optical element 10 to the base 32 by means of a non-positive connection.

Fig. 4 shows in an exemplary embodiment a platform 30 of an optical device 1 in a schematic perspective view. The platform comprises the base 32. In the base 32 is a recess, which is transparent for light in the visible wavelength range.

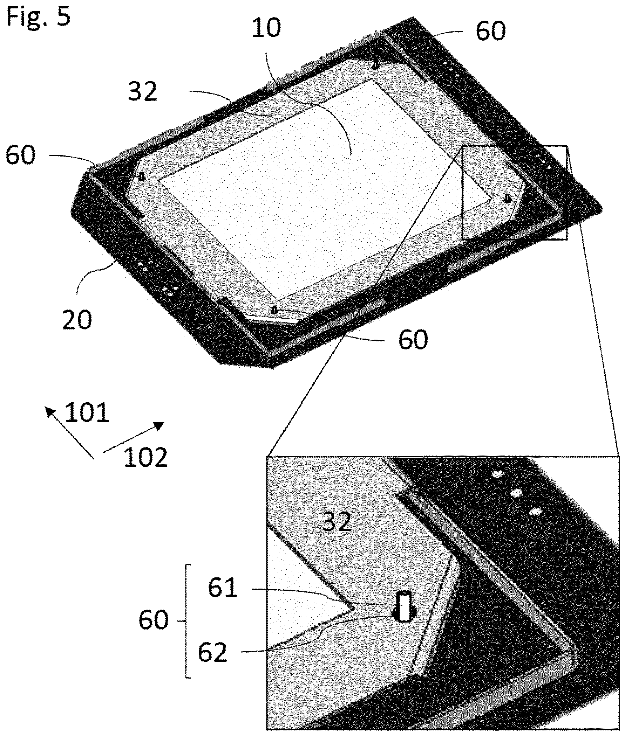

Fig. 5 shows an exemplary embodiment of an optical device 1 with a transmission structure 60 in a schematic perspective view. The transmission structure 60 comprises four openings 62 which are arranged in the base 32 and four pins 61. Both, openings 62 and pins 61 have a circular contour seen in top view. Each pin 61 extends through one of the openings 62. The pins 61 have a smaller diameter than the openings 62. The ratio of the diameter of the opening to the diameter of the pin defines the amplitude of the motion path of the base 32. The transmission structure limits the maximum deflection of the base 32 with respect to the carrier 20 along the xy-plane. In operation, the pin lies against the inner contour limiting the opening 62. Thereby the contour of the opening 62 defines the movement path of the base 32.

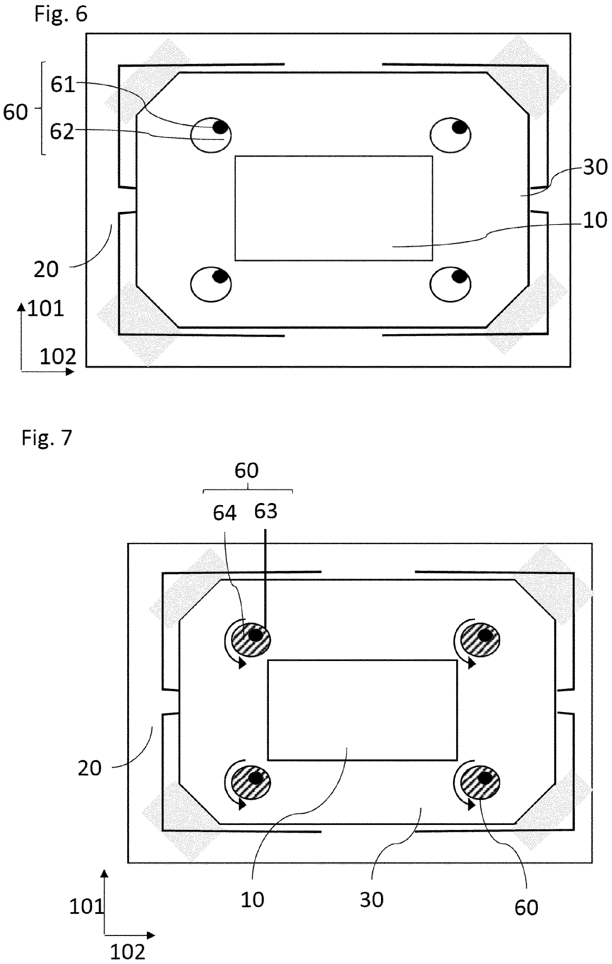

Fig. 6 shows an exemplary embodiment of an optical device with a transmission structure 60 in a schematic top view. The x-spring and the y-spring are designed such that the first resonance frequency and the second resonance frequency are below 10 Hz. Thus, essentially the transmission structure 60 directs the motion of the base 32.

Fig. 7 shows an exemplary embodiment of an optical device 1 with a transmission structure 60 in a schematic top view. The transmission structure 60 shown in figure 7 differs from the embodiment of the transmission structure shown in figure 6. The transmission structure 60 is a cam 65 having an axis 63 and a bearing 64. The axis 63 is the axis of rotation around which the bearing 64 rotates during intended operation. The axis 63 is off center of the bearing 64. Thus, the base is forced into a circular motion with respect to the carrier 20. The distance of the axis 63 to the bearing 64 respectively defines the amplitude of the circular motion path of the base 32.
The invention is not restricted to the exemplary embodiments by the description based on these. Rather, the invention encompasses every new feature and every combination of features, which in particular includes every combination of features in the patent claims, even if this feature or this combination itself is not explicitly specified in the patent claims or exemplary embodiments.

### List of reference numerals

- 1: Optical device
- 20: Carrier
- 30: Platform
- 31: Elastic structure
- 311: Beam of first kind
- 312: Beam of second kind
- 32: Base
- 33: Recess
- 34: Fixing element
- 40: Actuator
- 50: Controller
- 51: Sensor
- 60: Transmission structure
- 61: Pin
- 62: Opening
- 63: Axis
- 64: Bearing
- 65: cam
- 101: x-direction
- 102: y-direction

## Claims

1. Optical device (1) comprising an optical element (10), which is mounted on a carrier (20) by means of a platform (30),
- the platform (30) comprises a base (32) and an elastic structure (31), wherein
- the base (32) is connected to the optical element (10),
- the elastic structure (31) connects the base (32) and the carrier (20),
- the platform (30) extends along an x-y plane defined by an x-direction (101) and a y- direction (102),
- an actuator (40) is arranged to apply a force to the base (32) in a direction along the x-y-plane,
- the elastic structure (32) is elastic in the x-direction (101) and in the y-direction (102), and
- the optical element (10) is a transmissive optical element.

2. Optical device (1) according to claim 1 wherein the platform (30) has a first resonance frequency along the x-direction (101) and a second resonance frequency along the y-direction (102) and
- the first and the second resonance frequencies are essentially identical, or
- the first and the second resonance frequency differ from each other between 1% and 5%.

3. Optical device (1) according to one of the preceding claims, wherein the elastic structure (32) comprises an x-spring and a y-spring, wherein the x-spring comprises at least one bending beam of a first kind (311) and the y-spring comprises at least one bending beam of a second kind (312), wherein
- in an undeflected state the bending beam of the first kind (311) extends perpendicularly to the x-direction (101), and
- in an undeflected state the bending beam of the second kind (312) extends perpendicularly to the y-direction (102).

4. Optical device (101) according to claim 3, wherein the base has an outer contour, the bending beam of the first kind extends along a first region of the outer contour, the bending beam of the second kind extends along a second region of the outer contour.

5. Optical device (101) according to one of the preceding claims, wherein the stiffness of the elastic structure (32) for movements in a direction obliquely with respect to the x-y-plane is at least 10 times higher than the stiffness of the elastic structure (32) for movements in a direction along the x-y-plane.

6. Optical device (1) according to one of the preceding claims comprising
- a sensor (51) which is arranged to detect a position of the base (32) with respect to the carrier (31), and
- a controller (50) which is arranged to control a frequency and /or amplitude of the relative motion of the base (32) with respect to the carrier (20).

7. Optical device (1) according to the preceding claim, wherein the actuator (40) is a voice coil actuator, wherein the voice coil actuator is the sensor (51).

8. Optical device (1) according to one of the preceding claims comprising a transmission element (60), wherein the transmission element is arranged to limit the maximum deflection of the base (32) with respect to the carrier (20) in all directions along the x-y-plane, wherein the maximum deflection in all directions along the x-y-plane is essentially the same.

9. Optical device according to one of the preceding claims, wherein the base (32) and the elastic structure (31) are fabricated in a one-piece manner.

10. Optical device according to one of the preceding claims, comprising an optical axis extending through the optical element (10).

11. Method for manufacturing an optical device (1) comprising a platform (30) with a base (32) and an elastic structure (31), wherein
- the base (32) and the elastic structure (31) are fabricated from a common metal sheet
- the base (32) comprises a first portion of the metal sheet and the elastic structure (31) comprises a second portion of the metal sheet, wherein
- the elastic structure (31) is manufactured by bending the first portion by 90° with respect to the second portion.

12. Method according to the preceding claim, wherein the elastic structure (31) comprises the x-spring with the bending beam of the first kind (311) and the y-spring with the bending beam of the second kind (312), wherein the bending beam of the first kind (311) and the bending beam of the second kind (312) are fabricated in a one-piece manner.

13. Method for driving an optical device (1) comprising an optical element (10) which is mounted on a carrier (20) by means of a platform (30), wherein
- an actuator (40) exerts a force to deflect the optical element (10) with respect to the carrier (20),
- the actuator (40) is driven with a periodic excitation signal having an excitation frequency,
- the platform (30) has a first resonance frequency in an x-direction (101) and a second resonance frequency in a y-direction (102), wherein
- either the excitation frequency is larger or smaller than both the first and the second resonance frequency,
- or the excitation frequency is in between the first and the second resonance frequency and the absolute value of the difference between excitation frequency and the first resonance frequency and the difference of the excitation frequency and the second frequency is essentially identical.

14. Method according to claim 13, wherein the optical device comprises a sensor (51) which is arranged to detect a position of the base (32) with respect to the carrier (31), and a controller (50) which is arranged to control a frequency and /or amplitude of the relative motion of the base (32) with respect to the carrier (20), wherein the movement path of the base in relation to the carrier is controlled with a position based closed-loop control circuit comprising the sensor (51) and the controller (50).
